# EUROPEAN PATENT APPLICATION

(11) **EP 0 981 109 A2**
(43) Date of publication of application: **23.02.2000**
(21) Application number: 99306376.7
(22) Date of filing: 12.08.1999
(51) Int. Cl.: G06T 17/40

(54) **Image display method and apparatus**

(30) Priority: 14.08.1998 JP 22968798
(71) Applicant: GE YOKOGAWA MEDICAL SYSTEMS, LTD., Hino-shi, Tokyo 191 (JP)
(72) Inventor: Sato, Natsuko, Hino-shi, Tokyo (JP); Minami, Manabu, Yokohama-shi, Kanagawa (JP)
(74) Representative: Goode, Ian Roy

(57) **Abstract**

In order to enable observation of the solid (three-dimensional) structure of a three-dimensional tissue and the relationship between the three-dimensional tissue and its surrounding tissue in one screen, the present method and apparatus extracts a three-dimensional tissue such as a blood vessel (K) from data acquired from a subject; produces a cross-sectional image of a cross section intersecting the three-dimensional tissue; produces a convex three-dimensional image visualizing the wall surface of the three-dimensional tissue on the front side relative to the cross section; and produces a composite image (Gs) of the convex three-dimensional image and the cross-sectional image for display.

## Description

The present invention relates to an image display method and apparatus, and more particularly to an image display method and apparatus which enables observation of the solid (three-dimensional) structure of a three-dimensional tissue and the relationship between the three-dimensional tissue and its surrounding tissue in one screen.

Conventional techniques are known for extracting a three-dimensional tissue (i.e., a structure in a human body such as the digestive organs) from data acquired by image information acquisition means such as an X-ray CT (computed tomography) apparatus or a magnetic resonance image diagnostic apparatus, and producing a three-dimensional image of the three-dimensional tissue for display.

Besides, Japanese Patent Application Laid Open No. 10-31761 discloses an image display method and apparatus for producing an endoscopic image of the wall surface of an internal space of a three-dimensional tissue (i.e., a structure in a human body such as the digestive organs) as seen from a viewpoint in the intemal space using data acquired by image information acquisition means such as an X-ray CT apparatus or a magnetic resonance image diagnostic apparatus, combining the endoscopic image with a cross-sectional image of the three-dimensional tissue, and displaying the combined image.

Using the former conventional technique for extracting a three-dimensional tissue and producing a three-dimensional image thereof for display, one can observe the solid structure of the three-dimensional tissue (for example, whether a swelling grows in a blood vessel), but the relationship between the solid structure and its surrounding tissue (for example, near which organ the vascular swelling grows) cannot be observed.

Using the latter prior art disclosed in Japanese Patent Application Laid Open No. 10-31761, one can simultaneously observe the surface state (for example, the extent of an ulcer grown on the stomach wall surface) and the cross-sectional structure (for example, the depth of the ulcer on the stomach wall surface) by means of an endoscopic image and a cross-sectional image, but the solid structure of the three-dimensional tissue cannot be observed because the endoscopic image is simulant of an image provided by an optical endoscope which allows one to observe only the internal wall surface of the three-dimensional tissue.

It is an object of the present invention to provide an image display method and apparatus which enables observation of the solid structure of a three-dimensional tissue and the relationship between the three-dimensional tissue and its surrounding tissue in one screen.

In accordance with a first aspect of the invention, there is provided an image display method comprising the steps of: extracting a three-dimensional tissue from data acquired from a subject; producing a cross-sectional image of a cross section intersecting the three-dimensional tissue; producing a convex three-dimensional image visualizing the wall surface of the three-dimensional tissue on the front side relative to the cross section; and producing a composite image of the convex three-dimensional image and the cross-sectional image for display.

In the above configuration, the 'cross-sectional image' includes an MPR (multi-planar reformation). Moreover, by the expression 'the front side relative to a cross section' is meant'the side closer to a viewpoint from which the cross-sectional image is viewed relative to the position of the cross section'.

The image display method of the first aspect enables observation of the solid structure of a three-dimensional tissue by means of a convex three-dimensional image visualizing the wall surface of the three-dimensional tissue on the front side relative to a cross section, and at the same time, enables observation of the relationship between the three-dimensional tissue and its surrounding tissue by means of a cross-sectional image. Thus, whether a swelling grows in a blood vessel or near which organ the vascular swelling grows, for example, can be observed in one screen.

In accordance with a second aspect of the invention, there is provided an image display method comprising the step of: allowing an operator to select displaying an image according to the method as described regarding the first aspect, or producing a concave three-dimensional image visualizing the wall surface of the three-dimensional tissue on the back side relative to the cross section and producing a composite image of the concave three-dimensional image and the cross-sectional image for display.

In the above configuration, by the expression 'the back side relative to a cross section' is meant'the side further from a viewpoint from which the cross-sectional image is viewed relative to the cross section'.

The image display method of the second aspect enables observation as described regarding the first aspect, and in addition, enables observation of the surface state of the wall surface of a three-dimensional tissue by means of a concave three-dimensional image visualizing the wall surface of the three-dimensional tissue on the back side relative to the cross section, and at the same time, observation of the cross-sectional structure by means of a cross-sectional image. Thus, the most suitable composite image can be selected for display considering an object to be diagnosed and a purpose of diagnosis.

In accordance with a third aspect of the invention, there is provided an image display method comprising the step of: successively displaying at least either of composite images of convex three-dimensional images and cross-sectional images as described regarding the first aspect or composite images of concave three-dimensional images and cross-sectional images as described regarding the second aspect, for a plurality of successive cross-sectional positions along a predefined movement axis.

The image display method of the third aspect can cine-display the composite images, thereby enabling successive observation of a desired range. Thus, a lesion site can be found more easily.

In accordance with a fourth aspect of the invention, there is provided an image display apparatus comprising: three-dimensional tissue extracting means for extracting a three-dimensional tissue from data acquired from a subject; cross-sectional image producing means for producing a cross-sectional image of a cross section intersecting the three-dimensional tissue; convex three-dimensional image producing means for producing a convex three-dimensional image visualizing the wall surface of the three-dimensional tissue on the front side relative to the cross section; and image composing/displaying means for producing a composite image of the convex three-dimensional image and the cross-sectional image for display.

The image display apparatus of the fourth aspect can suitably implement the image display method as described regarding the first aspect.

In accordance with a fifth aspect of the invention, there is provided the image display apparatus as described regarding the fourth aspect, comprising: concave three-dimensional image producing means for producing a concave three-dimensional image visualizing the wall surface of the three-dimensional tissue on the back side relative to the cross section; and selection means for selectively activating either the convex three-dimensional image producing means or the concave three-dimensional image producing means according to an operator's instruction; wherein, when the concave three-dimensional image producing means is selected, the image composing/displaying means produces a composite image of the concave three-dimensional image and the cross-sectional image for display.

The image display apparatus of the fifth aspect can suitably implement the image display method as described regarding the second aspect.

In accordance with a sixth aspect of the invention, there is provided the image display apparatus as described regarding the fourth or fifth aspect, wherein the image composing/displaying means is capable of successively displaying composite images for a plurality of successive cross-sectional positions along a predefined movement axis.

The image display apparatus of the sixth aspect can suitably implement the image display method as described regarding the third aspect.

Thus, according to the image display method and apparatus of the present invention, the solid structure of a three-dimensional tissue and the relationship between the three-dimensional tissue and its surrounding tissue can be observed in one screen, and whether a swelling grows in a blood vessel or near which organ the vascular swelling grows, for example, can be observed in one screen.

Further objects and advantages of the present invention will be apparent from the following description of the preferred embodiments of the invention as illustrated in the accompanying drawings, in which:

Figure 1 is a configuration diagram of an X-ray CT apparatus incorporating an image display apparatus in accordance with one embodiment of the present invention.

Figure 2 is a flow chart of a procedure for displaying a composite image employing the image display apparatus of Fig. 1.

Figure 3 is a schematic diagram of a plurality of original two-dimensional images for a three-dimensional image.

Figure 4 illustrates a selected one of the two-dimensional images.

Figure 5 illustrates an example of an extracted three-dimensional tissue.

Figure 6 is a flow chart continued from Fig. 2.

Figure 7 illustrates an example of a screen for specifying a viewpoint position and a gradient of a field-of-view.

Figure 8 is a flow chart continued from Fig. 2.

Figure 9 is a flow chart continued from Fig. 2.

Figure 10 exemplarily shows a cross-sectional image.

Figure 11 exemplarily shows a convex three-dimensional image.

Figure 12 exemplarily shows a composite image of the cross-sectional image and the convex three-dimensional image.

Figure 13 is a schematic diagram of a plurality of original two-dimensional images for a three-dimensional image.

Figure 14 illustrates a selected one of the two-dimensional images.

Figure 15 illustrates an example of a screen for specifying a viewpoint position and a gradient of a field-of-view.

Figure 16 exemplarily shows a cross-sectional image.

Figure 17 exemplarily shows a concave three-dimensional image.

Figure 18 exemplarily shows a composite image of the cross-sectional image and the concave three-dimensional image.

The present invention will now be described in more detail with reference to embodiments shown in the accompanying drawings.

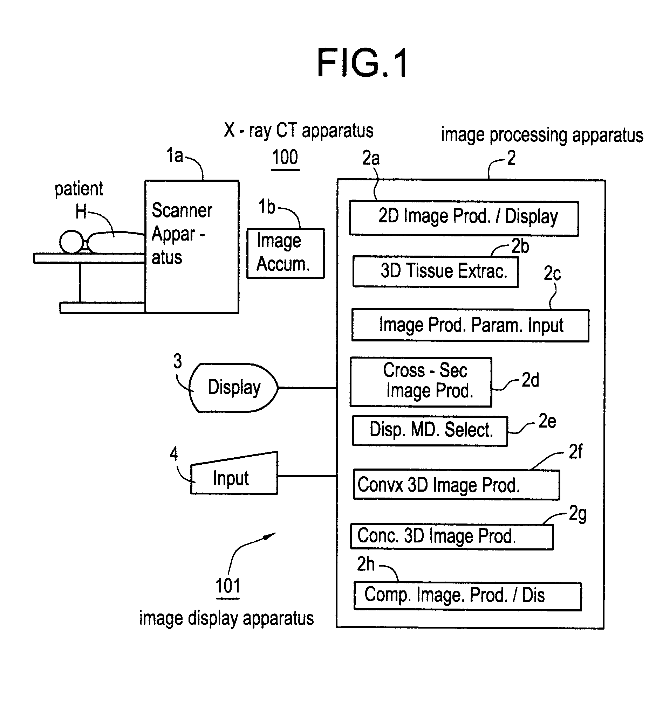

Figure 1 is a configuration diagram of an X-ray CT apparatus 100 incorporating an image display apparatus 101 in accordance with one embodiment of the present invention.

A scanner apparatus 1a scans a subject H at different slice positions (a slice represents a planar region to be imaged in tomography), and acquires scan data for a plurality of slices.

An image accumulating means 1b accumulates the scan data.

The image display apparatus 101 is comprised of an image processing apparatus 2, a display unit 3 and an input device 4.

The image processing apparatus 2 includes a two-dimensional image producing/displaying section 2a, a three-dimensional tissue extracting section 2b, an image production parameter input section 2c, a cross-sectional image producing section 2d, a display mode selecting section 2e, a convex three-dimensional image producing section 2f, a concave three-dimensional image producing section 2g, and a composite image producing/displaying section 2h.

The two-dimensional image producing/displaying section 2a processes the scan data for the plurality of slices, generates two-dimensional image data for the individual slices, and displays the two-dimensional images on the display unit 3.

A human operator reads a CT value range of a three-dimensional tissue whose three-dimensional image is to be produced, from the two-dimensional image, and inputs the CT value range via the input device 4.

The three-dimensional tissue extracting section 2b guides the input of the CT value range and receives the input CT value range, which is used in combination with the two-dimensional image data for the slices to extract a three-dimensional tissue.

The operator reads a CT value range of a tissue whose cross-sectional image is to be produced, from the two-dimensional image, and inputs the CT value range via the input device 4. Moreover, the operator inputs a position and an aspect of the cross section via the input device 4. If cine-display is to be conducted, the operator also inputs a range for the cine-display via the input device 4.

The image production parameter input section 2c guides the input of the parameters for image production such as the CT value range, receives the input image production parameters and passes them to the cross-sectional image producing section 2d.

The cross-sectional image producing section 2d produces cross-sectional image from the passed image production parameters and the two-dimensional image data for the slices.

The operator inputs via the input device 4 instructions of a selection whether to conduct the cine-display, and a selection between displaying a composite image of the cross-sectional image and a convex three-dimensional image, and displaying a composite image of the cross-sectional image and a concave three-dimensional image.

The display mode selecting section 2e guides the input of the selection instructions, and activates the convex three-dimensional image producing section 2f or the concave three-dimensional image producing section 2g, and the composite image producing/displaying section 2h, according to the input selection instructions.

The convex three-dimensional image producing section 2f produces a convex three-dimensional image visualizing the wall surface of the three-dimensional tissue on the front side relative to the cross section.

The concave three-dimensional image producing section 2g produces a concave three-dimensional image visualizing the wall surface of the three-dimensional tissue on the back side relative to the cross section.

The composite image producing/displaying section 2h produces a composite image of the cross-sectional image and the convex three-dimensional image or a composite image of the cross-sectional image and the concave three-dimensional image for display.

When the cine-display is to be conducted, a plurality of composite images within the cine-display range are produced for display.

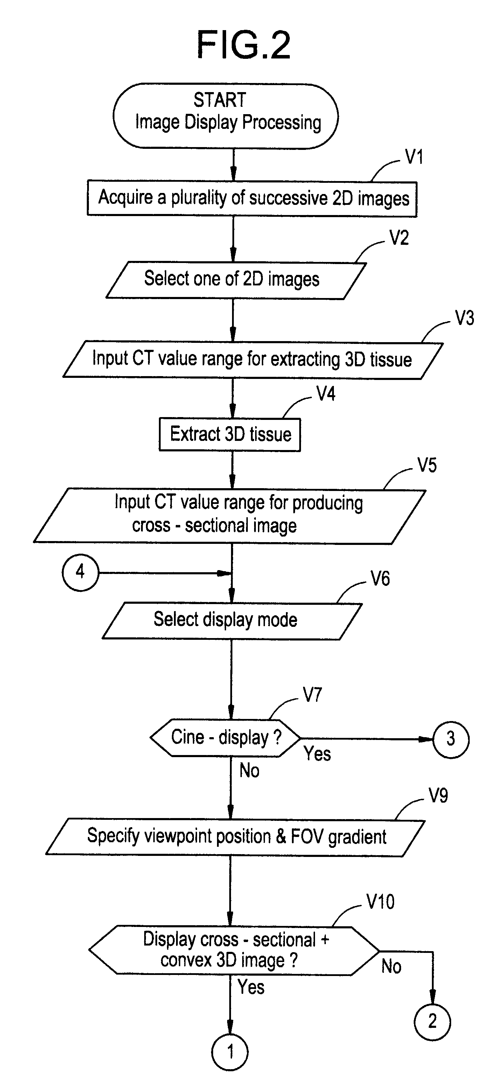

Figure 2 is a flow chart illustrating the operation of producing a composite image for display by the image display apparatus 101.

In Step V1, data for a plurality of two-dimensional images are acquired by scanning the subject H at a plurality of successive slice positions.

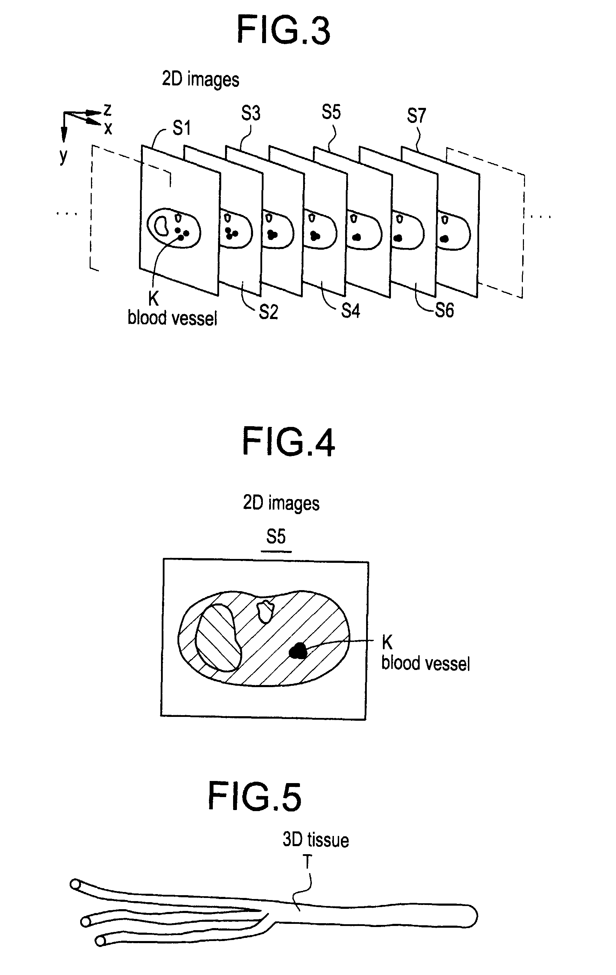

Figure 3 shows exemplary two-dimensional images S1 ― S7 obtained from the plurality of successive slice positions.

In the two-dimensional images S1 ― S7, reference symbol K designates a blood vessel (a blood flow imaged with a contrast agent).

The two-dimensional images S1― S7 are cross-sectional images in planes orthogonal to the z-axis. The z-axis represents a movement axis for the subject H in the scanner apparatus 1a, the x-axis represents a horizontal axis perpendicular to the z-axis, and the y-axis represents a vertical axis perpendicular to the z-axis.

Returning to Fig. 2, in Step V2, the operator selects an appropriate one of the plurality of successive two-dimensional images using the input device 4. For example, a two-dimensional image S5 is selected, as shown in Fig. 4.

In Step V3, the operator reads a CT value range of a three-dimensional tissue to be extracted (for example, if a contrast agent was introduced in the blood vessel K, the CT value range is selected as 'more than a value slightly smaller than the CT value of the contrast agent') from the selected two-dimensional image, and inputs the CT value range.

In Step V4, data within the CT value range input in Step V3 are extracted from the two-dimensional image S1 ― S7 to extract a three-dimensional tissue T, as exemplarily shown in Fig. 5.

In Step V5, the operator reads a CT value range of a tissue whose cross-sectional image is to be produced (for example, a CT value range of a tissue of the human body) from the selected two-dimensional image, and inputs the CT value range via the input device 4.

In Step V6, the operator selects a display mode. That is, the operator inputs instructions of a selection whether to conduct the cine-display, and a selection between displaying a composite image of a cross-sectional image and a convex three-dimensional image, and displaying a composite image of a cross-sectional image and a concave three-dimensional image.

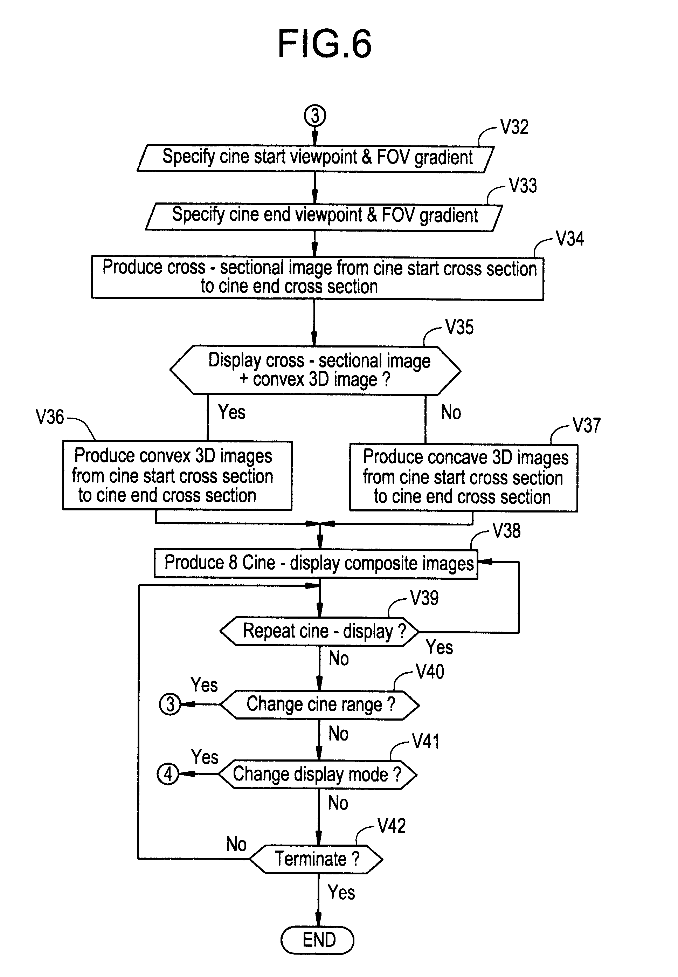

In Step V7, a check is made on whether the cine-display is selected, and if the cine-display is selected, the process goes to Step V32 (Fig. 6), otherwise to Step V9.

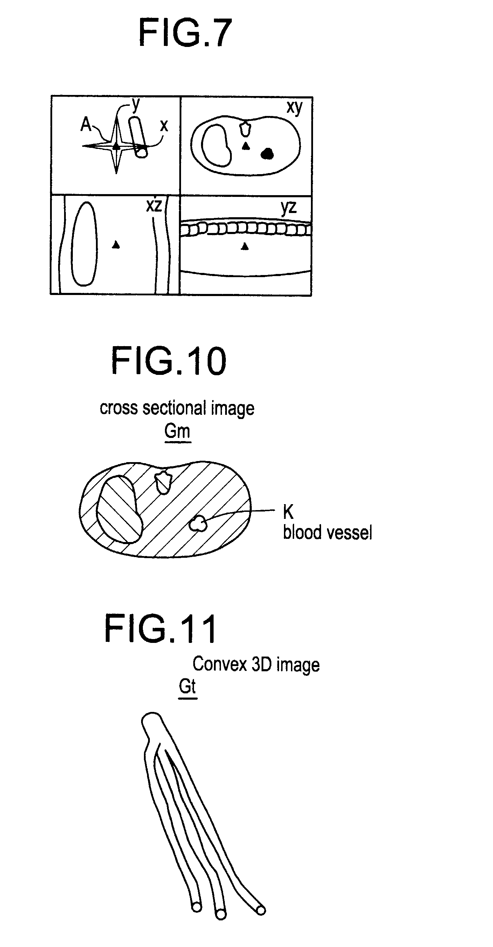

In Step V9, as exemplarily shown in Fig. 7, an image is displayed of the three-dimensional tissue T as seen from a default viewpoint position (which is in the three-dimensional space) and at a default field-of-view gradient (i.e., in a viewing direction) with an image of an upright airplane-shaped icon A superimposed, and an x-y cross-sectional image, a y-z cross-sectional image and an x-z cross-sectional image produced from the two-dimensional images S1 ― S7 are displayed, wherein the x axis represents the horizontal axis of the airplane-shaped icon A, the y axis represents the vertical axis and the z axis represents an axis which passes the intersection of the x and y axes and is orthogonal to the x and y axes (i.e., an axis perpendicular to the screen). The intersection (i.e., the intersection of the horizontal and vertical axes) is also displayed in the x-y, y-z and x-z cross-sectional images. As the operator drags the point of the intersection with a mouse in this screen, the viewpoint position is translated, causing the images to change accordingly. As the operator drags the airplane-shaped icon A at the end of the x axis in the vertical direction or at the end of the y axis in the horizontal direction with the mouse, the airplane-shaped icon A is rotated in the x-y plane, and when the operator releases the mouse button, the airplane-shaped icon A recovers the upright position while the gradient of the field-of-view rotates in the x-y plane by that rotation angle, causing the images to change accordingly. As the operator drags the airplane-shaped icon A at the end of the x axis in the oblique direction or at the end of the y axis in the oblique direction with the mouse, the airplane-shaped icon A is tilted in a three-dimensional manner, and when the operator releases the mouse button, the airplane-shaped icon A recovers the upright position while the gradient of the field-of-view rotates by that tilt angle, causing the images to change accordingly. When the operator presses the SPACE key, the viewpoint position moves forward along the z axis, and when the operator presses the SHIFT key, the viewpoint position moves backward along the z axis, causing the images to change accordingly. A desired viewpoint position and a desired gradient of the field-of-view are thus specified according to the above operations.

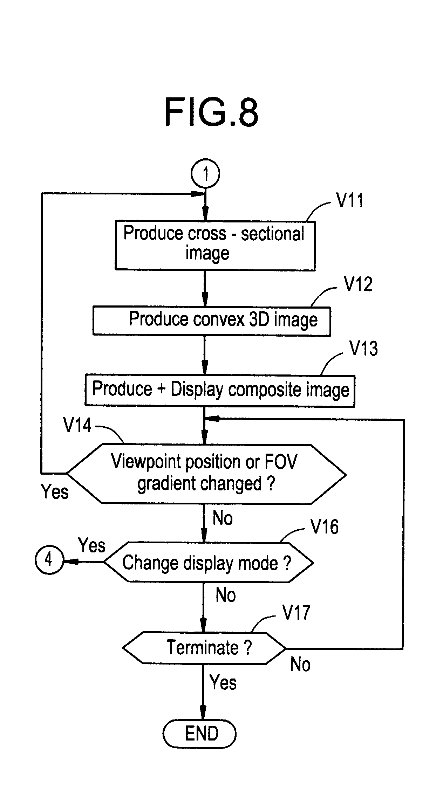

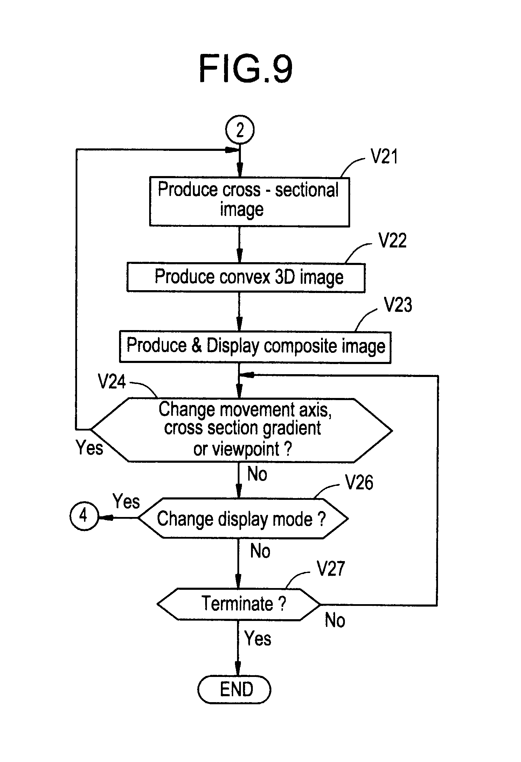

In Step V10, a check is made on whether to display a composite image of the cross-sectional image and the convex three-dimensional image, and if it is to be displayed, the process goes to Step V11 (Fig. 8), otherwise to Step V21 (Fig. 9).

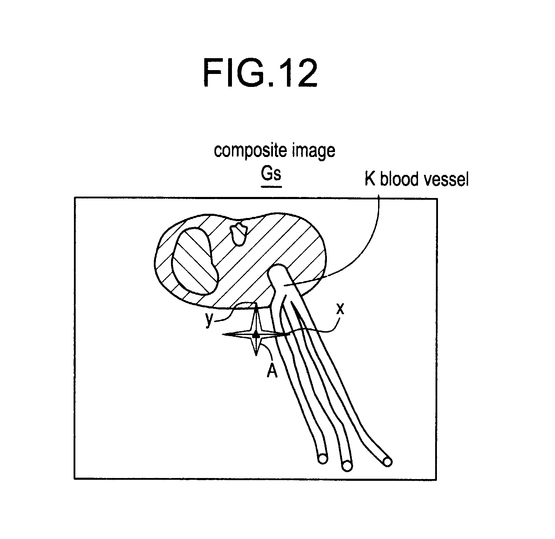

Now turning to Fig. 8, in Step V11, data of the x-y plane defined in Step 9 and within the CT value range input in Step V5 are extracted from the two-dimensional images S1 ― S7 to produce a cross-sectional image. An example of such cross-sectional image Gm is shown in Fig. 10.

Returning to Fig. 8, in Step V12, a convex three-dimensional image visualizing the wall surface of the three-dimensional tissue T on the front side relative to the x-y plane is produced. An example of such convex three-dimensional image Gt is shown in Fig. 11.

Returning to Fig. 8, in Step V13, a composite image Gs as exemplarily shown in Fig. 12 is produced by combining the cross-sectional image Gm and the convex three-dimensional image Gt, and is displayed on the screen. Also on the composite image Gs, the airplane-shaped icon A is superimposed.

In Step V14, as the operator drags the airplane-shaped icon A on the screen of Fig. 12, the viewpoint position and the gradient of the field-of-view is changed accordingly, and the process goes back to Step V11. The observed site and angle can be thus changed while viewing the composite image Gs. When an apparatus having low processing performance is employed, it is preferred that areas of the cross-sectional image and the convex three-dimensional image be reduced and a Z-buffer technique be employed to enable the real-time processing. If the operator provides no operation, the process goes to Step V16.

In Step V16, if the operator provides an operation to change the display mode, the process goes back to Step V6 (Fig. 2), and if the operator provides no operation, the process goes to Step V17.

In Step V17, if the operator provides an operation to terminate the process, the process is terminated, and if the operator provides no operation, the process goes back to Step V14.

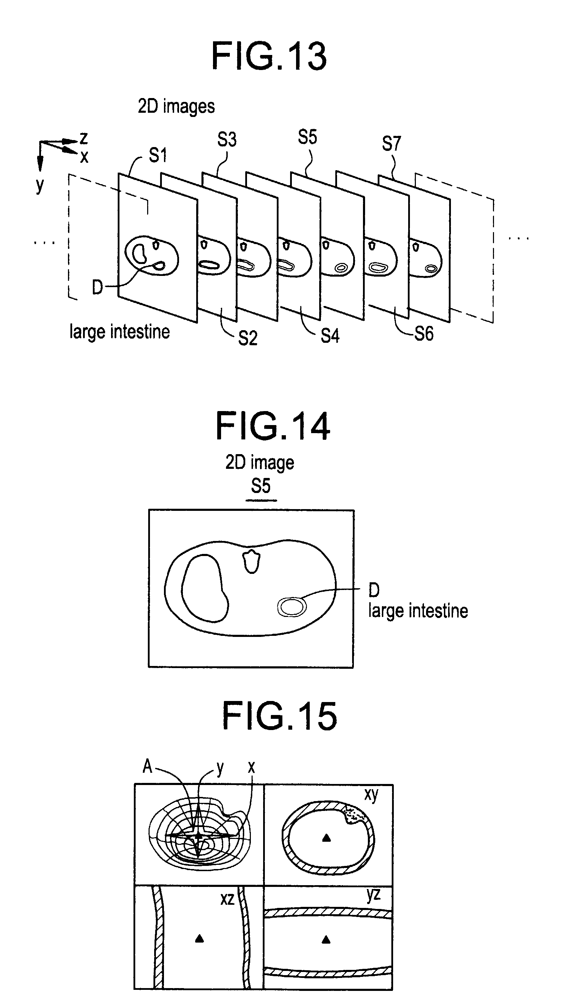

Now Steps V21 ― V27 shown in Fig. 9, i.e., a process of displaying a composite image of a cross-sectional image and a concave three-dimensional image not in the cine-display mode will be described, on the premise that two-dimensional images S1 ― S7 as shown in Fig. 13 has been produced in Step V1 in Fig. 2, a CT value range of the large intestine D read from a two-dimensional image S5 as shown in Fig. 14 has been input in Step V3, a three-dimensional tissue T has been extracted as shown in Fig. 5 in Step V4, a CT value range of the large intestine D has been input in Step V5, and a viewpoint position has been defined within the large intestine D as shown in Fig. 15 in Step V9.

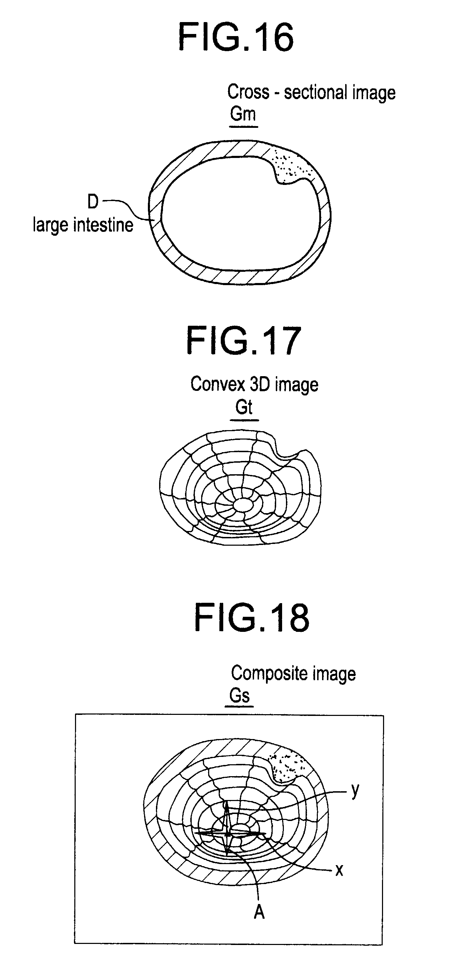

In Step V21 of Fig. 9, data of the x-y plane defined in Step 9 and within the CT value range input in Step V5 are extracted from the two-dimensional images S1 ― S7 to produce a cross-sectional image as seen from the side of a viewpoint mark that is not illustrated. An example of such cross-sectional image Gm is shown in Fig. 16.

In Step V22, a concave three-dimensional image visualizing the wall surface of the three-dimensional tissue T on the back side relative to the x-y plane is produced. An example of such concave three-dimensional image Gt is shown in Fig. 17.

In Step V23, a composite image Gs as exemplarily shown in Fig. 18 is produced by combining the cross-sectional image Gm and the concave three-dimensional image Gt, and is displayed on the screen. Also on the composite image Gs, the airplane-shaped icon A is superimposed.

In Step V24, as the operator drags the airplane-shaped icon A on the screen of Fig. 18, the viewpoint position and the gradient of the field-of-view is changed accordingly, and the process goes back to Step V21. The observed site and angle can be thus changed while viewing the composite image Gs. If the operator provides no operation, the process goes to Step V26.

In Step V26, if the operator provides an operation to change the display mode, the process goes back to Step V6 (Fig. 2), and if the operator provides no operation, the process goes to Step V27.

In Step V27, if the operator provides an operation to terminate the process, the process is terminated, and if the operator provides no operation, the process goes back to Step V24.

Now Steps V32 ― V42 shown in Fig. 6, i.e., a process of cine-display will be described, on the premise that the two-dimensional images S1 ― S7 shown in Fig. 13 has been produced in Step V1 in Fig. 2, a CT value range of the large intestine D read from the two-dimensional image S5 of Fig. 14 has been input in Step V3, a three-dimensional tissue has been extracted in a similar manner as illustrated before in Fig. 5 in Step V4, and a CT value range of the large intestine D has been input in Step V5.

In Step V 32 of Fig. 6, a cine start viewpoint position and a gradient of the field-of-view are specified in a similar manner as in Step V9.

In Step V 33, a cine end viewpoint position and a gradient of the field-of-view are specified in a similar manner as in Step V9.

In Step V34, positions and gradients of the cross sections are determined at predefined intervals between the cine start cross section and the cine end cross section (so that smooth change is ensured from the cine start cross section to the cine end cross section) to produce respective cross-sectional images at these cross sections.

In Step V35, a check is made on whether to display composite images of the cross-sectional images and convex three-dimensional images, and if they are to be displayed, the process goes to Step V36, otherwise to Step V37.

In Step V36, for the cross sections defined in Step V34, respective convex three-dimensional images visualizing the wall surface of the three-dimensional tissue T on the front side relative to the individual cross sections are produced. The process then goes to Step V38.

In Step V37, for the cross sections defined in Step V34, respective concave three-dimensional images visualizing the wall surface of the three-dimensional tissue T on the back side relative to the individual cross sections are produced. The process then goes to Step V38.

In Step V38, for the cross sections defined in Step V34, respective composite images are produced by combining the cross-sectional images and the convex three-dimensional images or the concave three-dimensional images, and are cine-displayed on the screen.

In Step V39, if the operator provides an operation to repeat the cine-display, the process goes back to Step 38 to conduct the cine-display. If the operator provides no operation, the process goes to Step V40.

In Step V40, if the operator provides an operation to change the cine-display range, the process goes back to Step 32, and if the operator provides no operation, the process goes to Step V41.

In Step V41, if the operator provides an operation to change the display mode, the process goes back to Step V6 (Fig. 2), and if the operator provides no operation, the process goes to Step V42.

In Step V42, if the operator provides an operation to terminate the process, the process is terminated, and if the operator provides no operation, the process goes back to Step V39.

Although image information is acquired by a scanner apparatus in an X-ray CT apparatus in the above embodiment, data acquired by, for example, a magnetic resonance image diagnostic apparatus may be employed. That is, data may be acquired by any means as long as three-dimensional information can be constructed from the data.

Moreover, although data for a plurality of two-dimensional images are employed to produce a three-dimensional image in the above embodiment, three-dimensional volumetric data may be alternatively employed.

Furthermore, although the movement axis, i.e., a path along which the cross section is moved, is defined as the z axis in the above embodiment, it may be defined as follows:
(1) In the case that the extracted three-dimensional tissue T is a tubular or string-like material, its center axis is extracted. If there are a plurality of center axes, the operator is made to select one of them, and the axis is defined as the movement axis. If there is only one center axis, it is defined as the movement axis;
(2) In the case that the extracted three-dimensional tissue T is not a tubular or string-like material, the operator is made to specify the movement axis. For example, when the operator inputs start and end points in the three-dimensional tissue T, a straight line linking the start and end points is defined as the movement axis α.

In addition, although the above description has been made on an image display apparatus of the present invention as incorporated in an X-ray CT apparatus, the image display apparatus may operate separately from image information acquisition means as long as the image display apparatus is placed under circumstances so as to have an access to accumulated image information.

## Claims

1. An image display method comprising the steps of: extracting a three-dimensional tissue from data acquired from a subject; producing a cross-sectional image of a cross section intersecting said three-dimensional tissue; producing a convex three-dimensional image visualizing the wall surface of said three-dimensional tissue on the front side relative to said cross section; and producing a composite image of said convex three-dimensional image and said cross-sectional image for display.

2. An image display method comprising the step of: allowing an operator to select displaying an image according to claim 1, or producing a concave three-dimensional image visualizing the wall surface of said three-dimensional tissue on the back side relative to said cross section and producing a composite image of said concave three-dimensional image and said cross-sectional image for display.

3. An image display method comprising the step of: successively displaying at least either of composite images of convex three-dimensional images and cross-sectional images as defined in claim 1 or composite images of concave three-dimensional images and cross-sectional images as defined in claim 2, for a plurality of successive cross-sectional positions along a predefined movement axis.

4. An image display apparatus comprising: three-dimensional tissue extracting means for extracting a three-dimensional tissue from data acquired from a subject; cross-sectional image producing means for producing a cross-sectional image of a cross section intersecting said three-dimensional tissue; convex three-dimensional image producing means for producing a convex three-dimensional image visualizing the wall surface of said three-dimensional tissue on the front side relative to said cross section; and image composing/displaying means for producing a composite image of said convex three-dimensional image and said cross-sectional image for display.

5. The image display apparatus as defined in claim 4, comprising: concave three-dimensional image producing means for producing a concave three-dimensional image visualizing the wall surface of said three-dimensional tissue on the back side relative to said cross section; and selection means for selectively activating either said convex three-dimensional image producing means or said concave three-dimensional image producing means according to an operator's instruction; wherein, when said concave three-dimensional image producing means is selected, said image composing/displaying means produces a composite image of said -concave three-dimensional image and said cross-sectional image for display.

6. The image display apparatus as defined in claim 4 or 5, wherein said image composing/displaying means is capable of successively displaying composite images for a plurality of successive cross-sectional positions along a predefined movement axis.
